(19) Europäisches Patentamt
European Patent Office
Office européen des brevets

(11) **EP 4 618 461 A1**

(12) **EUROPEAN PATENT APPLICATION**
published in accordance with Art. 153(4) EPC

(43) Date of publication:
**17.09.2025 Bulletin 2025/38**

(21) Application number: **23849318.3**

(22) Date of filing: **31.07.2023**

(51) International Patent Classification (IPC):
***H04L 5/00*** (2006.01)

(52) Cooperative Patent Classification (CPC):
**H04L 5/00; H04W 52/02; H04W 72/0453;**
**H04W 72/1263**

(86) International application number:
**PCT/CN2023/110082**

(87) International publication number:
**WO 2024/027610 (08.02.2024 Gazette 2024/06)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.08.2022 CN 202210921080**

(71) Applicant: **Apogee Networks, LLC**
**Dallas, TX 75201 (US)**

(72) Inventor: **ZHANG, Xiaobo**
**Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS FOR WIRELESS COMMUNICATION**

(57) Disclosed in the present disclosure are method and apparatus for wireless communication. The first node receives a first CSI-ReportConfig and receives a first DCI; sends at least a first CSI Reporting as a response to receiving the first DCI; wherein the first CSI-ReportConfig is used to configure at least the first CSI Reporting; the first CSI Reporting occupies a CSI processing unit from the first symbol until the last symbol of the first physical layer channel; the first CSI Reporting is on the first physicallayer channel; the first symbol is related to the format of the first DCI. The present application improves the efficiency of CPU utilization while providing better compatibility.

## Description

### Technical Field

The present disclosure relates to methods and apparatuses for wireless communication system, particularly to schemes and apparatuses of Channel Status Information (CSI) in wireless communication systems.

### Background Art

In traditional wireless communication, User Equipment (UE) reporting may include at least one of a variety of auxiliary information, such as Channel state information (CSI), auxiliary information related to Beam Management, auxiliary information related to localization, and the like. The network device selects the appropriate transmission parameters for UE based on the UE reporting, such as residing in the cell, Modulation and Coding Scheme (MCS), Transmitted Precoding Matrix Indicator (TPMI), Transmission Configuration Indicator (TCI), etc. Further, the UE Reporting may be used to optimize network parameters such as better cell coverage, switch base stations based on the UE location, and the like.

In the New Radio (NR) system, the priority of the CSI report is defined, which is used to determine whether to assign CSI Processing Unit (CPU) resources to the corresponding CSIReporting for updating, or whether to drop the corresponding CSI report.

### Summary of Inwntion

In NR R (release) 15 and R16, the ability of UE to simultaneously perform CSI computing capabilities is introduced to determine the number of CSI Reporting that UE can update at the same time. The inventors have found, through research, that in order to reduce the energy consumption ofthe base station, it is possible to trigger periodic CSI Reporting or semi-continuous CSIReporting using dynamic signaling, at which point the CPU occupation time needs to be further adjusted.

Disclosed in the present application are a solution to the above problems. It is to be noted that although a large number of embodiments of the present application are described for NR systems, the present application can also be used forothertypes of cellular systems such as Long Term Evolution (LTE). Further, the adoption of a unified UE reporting scheme can reduce complexity or improve performance. In the absence of conflicts, the embodiments of any of the nodes ofthe present application and the features of the embodiments may be applied to any of the othernodes. In the absence of conflicts, the embodiments of the present application and the features in the embodiments may be combined with each other arbitrarily.

If desired, the interpretation of the terms in the present application may refer to the description of the standard protocol TS38 series of 3rd Generation Partner Project (3GPP).

Disclosed in the present application are a method for use in a first node for wireless communication, wherein it comprises:

a first receiver, receiving a first CSI-ReportConfig (CSI-Reporting Configuration) and a first Downlink Control Information (DCI);
a first transmitter, sending at least a first CSI Reporting as a response to receiving the first DCI;
wherein the first CSI-ReportConfig is used to configure at least the first CSI Reporting; the first CSI Reporting occupies a CSI processing unit from the first symbol until the last symbol of the first physical layer channel, the first CSI Reporting is on the first physicallayer channel; the first symbol is related to the format of the first DCI; when the format of the first DCI is a DCI format in one of the first DCI format, the first symbol is the first set of Physical Downlink Control Channel (PDCCH) occupied by the first DCI, wherein the first DCI format set includes at least one DCI format for uplink grant;

Also, when the format of the first DCI is one of the DCI formats in a second DCI format set:

the first transmitter, transmitting a first Hybrid Automatic Repeat reQuest (HARQ)-ACK over a second physical layer channel;
wherein the first HARQ-ACK is associated with the first DCI, the first symbol being later than the first symbol after the PDCCH occupied by the first DCI.

As an embodiment, the method described above utilizes a second DCI format set that triggers HARQ-ACK to dynamically trigger CSI Reporting, improving the feedback efficiency of CSI and reducing redundant overhead; further, it is beneficial to save power consumption of base stations or UE.

As an embodiment, the above method avoids a CSI Reporting triggered by a DCI in the second DCI format set from taking up the CPU prematurely, thereby improving the efficiency of use of the CPU.

Specifically, according to one aspect of the present application, for the methods described above, wherein it comprises:

performing a measurement in a first RS resource group, and the measurement in the first RS resource group being used to generate at least the first CSI Reporting;

wherein the first DCI is used to trigger the measurement in the first RS resource group, and the first RS resource group comprising at least one of a Channel Status Information Reference Signal (CSI-RS), a Channel State Information - Interference Measurement (CSI-IM) resource, and a Synchronous Signal/Physical Broadcast Channel Block (SS/PBCH block (SSB)) resource.

As an embodiment, the above method can reduce the redundant overhead caused by RS resources, especially periodic or semi-continuous RS resources.

As an embodiment, the above method can reduce the energy loss caused by the transmission of the base station side to remain on the RS resource.

The measurement in the first RS resource group includes at least one of an interference measurement and a channel measurement.

Specifically, according to one aspect of the present application, for the methods described above, wherein the format of the first DCI is one DCI format in a second DCI format set; the first symbol is the earliest symbol in the first occasion set, and the first occasion set includes at least one of the nearest Channel Status Information Reference Signal (CSI-RS) Occasion, the nearest Channel State Information - Interference Measurement (CSI-IM) occasion, or the nearest Synchronous Signal/Physical Broadcast Channel Block (SS/PBCH block (SSB)) occasion.

As an embodiment, the above aspects reduce the CPU occupancy time and improve the CPU utilization.

As an embodiment, the above aspects and the prior art maintain better compatibility.

Specifically, according to one aspect of the present application, for the methods described above, wherein the format of the first DCI is one of the DCI formats in a second DCI format set; the first symbol is the first symbol after the second physical layer channel.

As an embodiment, the above aspects balance the CPU occupancy time with the timely update of the first CSI Reporting.

Specifically, according to one aspect of the present application, the method above is characterized in that at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

As an embodiment, the above aspects and the prior art maintain better compatibility.

Specifically, according to one aspect of the present application, for the methods described above, wherein the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

Disclosed in the present application are a method for use in a second node for wireless communication, wherein it comprises:

sending a first CSI-ReportConfig and a first DCI;

receiving at least a first CSI Reporting, wherein the first DCI is used to trigger the first CSI Reporting;

wherein the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol after the PDCCH occupied by the first DCI, wherein the first DCI format set includes at least one DCI format for uplink grant;

Also, when the format of the first DCI is one of the DCI formats in a second DCI format set:

receiving a first HARQ-ACK on a second physical layer channel;

wherein the first HARQ-ACK is associated with the first DCI, the first symbol being later than the first symbol after the PDCCH occupied by the first DCI.

Specifically, according to one aspect of the present application, for the methods described above, wherein it comprises:

sending a reference signal in a first RS resource group, wherein the reference signal in the first RS resource group is used to generate the first CSI Reporting;
wherein the first DCI is used to trigger the measurement in the first RS resource group comprising at least one of a CSI-RS resource, a CSI-IM resource, and an SSB resource.

Specifically, according to one aspect of the present application, for the methods described above, wherein the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

Specifically, according to one aspect of the present application, for the methods described above, wherein the format of the first DCI is one of the DCI formats in a second DCI format set; the first symbol is the first symbol after the second physical layer channel.

Specifically, according to one aspect of the present application, the method above is characterized in that at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

Specifically, according to one aspect of the present application, for the methods described above, wherein the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

Disclosed in the present application are a first node for wireless communication, wherein it comprises:

a first receiver, receiving a first CSI-ReportConfig, receiving a first DCI;
a first transmitter, sending at least a first CSI Reporting as a response to receiving the first DCI;
wherein the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol after the PDCCH occupied by the first DCI, wherein the first DCI format set includes at least one DCI format for uplink grant;

Also, when the format of the first DCI is one of the DCI formats in a second DCI format set:

the first transmitter, sending a first HARQ-ACK on a second physical layer channel;
wherein the first HARQ-ACK is associated with the first DCI, the first symbol being later than the first symbol after the PDCCH occupied by the first DCI.

Disclosed in the present application are a second node for wireless communication, wherein it comprises:

a second transmitter, sending a first CSI-ReportConfig, sending a first DCI;
a second receiver, receiving at least a first CSI Reporting, wherein the first DCI is used to trigger the first CSI Reporting;
wherein the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol after the PDCCH occupied by the first DCI, wherein the first DCI format set includes at least one DCI format for uplink grant;

Also, when the format of the first DCI is one of the DCI formats in a second DCI format set:

the second receiver, receiving a first HARQ-ACK on a second physical layer channel;
wherein the first HARQ-ACK is associated with the first DCI, the first symbol being later than the first symbol after the PDCCH occupied by the first DCI.

## Description of Accompanying Drawings

Other features, purposes, and advantages of the present application will become more apparent by reading the detailed description of the non-limiting embodiments with reference to the following drawings:

FIG. 1 illustrates a flow diagram of sending a CSI Reporting of a first node according to an embodiment of the present disclosure;

FIG. 2 illustrates a schematic diagram of a network architecture according to an embodiment of the present disclosure;

FIG. 3 illustrates a schematic diagram of an embodiment of a wireless protocol architecture for a user plane and a control plane according to an embodiment of the present disclosure;

FIG. 4 illustrates a schematic diagram of a hardware module of a communication node according to an embodiment of the present disclosure;

FIG. 5 illustrates a transmission flow diagram between a first node and a second node according to an embodiment of the present disclosure;

FIG. 6 illustrates a schematic diagram of a first PDCCH, a first occasion set, and a first physical layer channel according to an embodiment of the present disclosure;

FIG. 7 illustrates a schematic diagram of a first PDCCH, a first occasion set, and a first physical layer channel according to yet another embodiment of the present disclosure;

FIG. 8 illustrates a structural block diagram of a processing apparatus for use in a first node according to an embodiment of the present disclosure;

FIG. 9 illustrates a structural block diagram of a processing apparatus for use in a second node according to an embodiment of the present disclosure.

Specific Implementation Method

The technical solution of the present application will be described in further detail below in conjunction with the accompanying drawings, and it is to be noted that, in the absence of conflicts, the embodiments of the present application and the features in the embodiments may be combined with each other arbitrarily.

## Embodiment 1

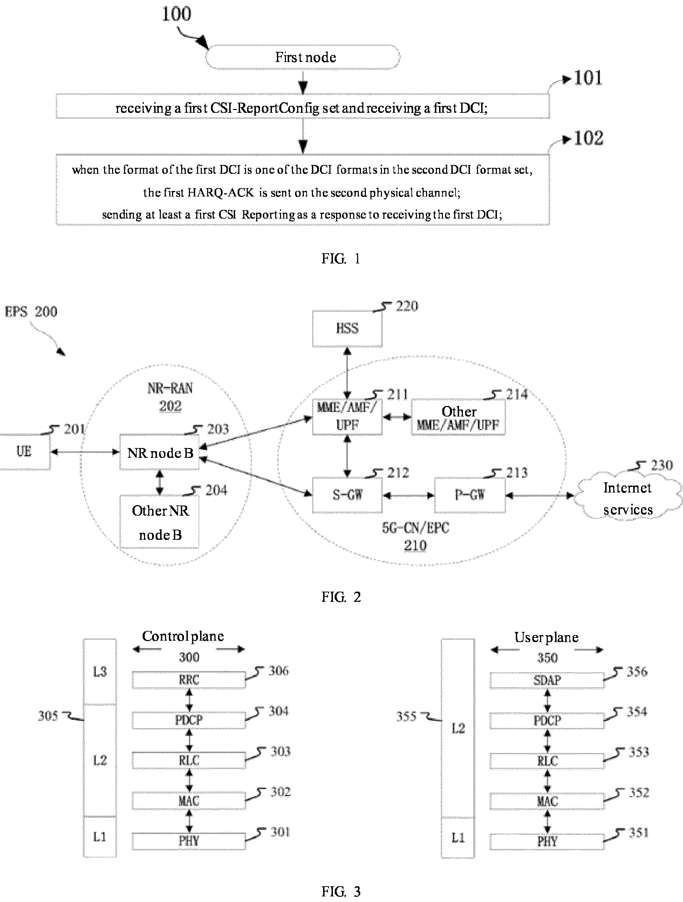

Embodiment 1 illustrates a flow diagram of sending a CSI Reporting of a first node for an embodiment of the present application, as shown in FIG. 1.

The first node 100 receives the first CSI-ReportConfig (CSI-Reporting Configuration) and the first DCI in step 101 and, in step 102, sending at least a first CSI Reporting as a response to receiving the first DCI;

In Embodiment 1, the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first set of PDCCH occupied by the first DCI, wherein the first DCI format set includes at least one DCI format for uplink grant;

In Embodiment 1, when the format of the first DCI is one of the DCI formats in a second DCI format set, the first node 100 sends a first HARQ-ACK on a second physical layer channel in step 102; wherein the first HARQ-ACK is associated to the first DCI, the first symbol being later than the first symbol after the PDCCH occupied by the first DCI.

As an embodiment, any DCI formats in the first DCI format set are used for Uplink Grant.

As an embodiment, the first DCI format set comprises a DCI format 0_1 and a DCI format 0_2.

As an embodiment, any DCI formats in the second DCI format set are used for Downlink Grant.

As an embodiment, any DCI formats in the second DCI format set is used to trigger HARQ-ACK.

As an embodiment, at least one DCI format of the second DCI format set is identified by a cell specific Radio Network Temporary Identifier (RNTI).

As an embodiment, at least one DCI format of the second DCI format set is identified by an Radio Network Temporary Identifier (RNTI) specific to the User Equipment (UE).

As an embodiment, the symbol is an Orthogonal Frequency Division Multiplexing (OFDM) symbol.

As an embodiment, the symbol is a Dissbreete Fourier Transform-spread-OFDM (DFT-s-OFDM) symbol.

As an embodiment, the first HARQ-ACK is associated with the first DCI, comprising: The first HARQ - ACK is used to determine that the first DCI is correctly encoded.

As an embodiment, the first HARQ-ACK is associated with the first DCI, comprising: The first HARQ-ACK is used to indicate whether a Transport Block (TB) scheduled by the first DCI is correctly encoded.

As an embodiment, the first HARQ-ACK is associated with the first DCI, comprising: The first HARQ-ACK is used to indicate that a Transport Block (TB) scheduled by the first DCI is correctly encoded.

As an embodiment, the first HARQ-ACK includes a HARQ-ACK Codebook.

As an embodiment, the first HARQ-ACK includes a Type-1 HARQ-ACK Codebook.

As an embodiment, the first HARQ-ACK includes a Type-2 HARQ-ACK Codebook.

As an embodiment, the first HARQ-ACK includes a Type-3 HARQ-ACK Codebook.

As an embodiment, the first HARQ-ACK is one bit of a HARQ-ACK Codebook.

As an embodiment, the second physical layer channel is Physical Uplink Control Channel (PUCCH).

As an embodiment, the second physical layer channel is Physical Uplink Shared Channel (PUSCH).

As an embodiment, the first physical layer channel is related to a format of the first DCI; when the format of the first DCI is a DCI format of one of the first DCI format sets, the first physical layer channel is PUSCH, and when the format of the first DCI is a DCI format of a second DCI format set, the first physical layer channel is PUCCH.

As an embodiment, the first physical layer channel is related to a format of the first DCI; when the format of the first DCI is a DCI format of one of the first DCI format sets, the first physical layer channel is PUSCH, and when the format of the first DCI is a DCI format of a second DCI format set, the first physical layer channel is PUCCH or PUSCH.

As an embodiment, the first DCI occupies only one PDCCH Candidate, the PDCCH occupied by the first DCI being a PDCCH candidate occupied by the first DCI.

As an embodiment, the first DCI occupies two PDCCH candidates, the first symbol after the PDCCH occupied by the first DCI being the first symbol after the latest symbol occupied by the two PDCCH candidates.

As an embodiment, the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

As an embodiment, the first CSI-ReportConfig is used to indicate the first occasion set.

As an embodiment, csi-IM-ResourcesForInterference in the first CSI-ReportConfig is used to configure the CSI-IM resources.

As an embodiment, the resourcesForChannelMeasurement in the first CSI-ReportConfig is used to configure a CSI-RS resource or an SSB resource.

As an embodiment, nzp-CSI-RS-ResourcesForInterference in the first CSI-ReportConfig is used to configure CSI-RS resources.

The CSI-RS resources, CSI-IM resources, or SSB resources described above occupy multiple time slots in the time domain, where parts within one time slot are referred to as an occasion.

As an embodiment, the time intervals between any two adjacent time slots of the plurality of time slots are the same.

As an embodiment, when the reportConfigType domain in the first CSI-ReportConfig is semiPersistentOn-PUCCH, the first symbol is the first symbol after the PDCCH occupied by the first DCI.

As an embodiment, the first CSI Reporting is calculated based on Physical Downlink Shared Channel (PDSCH) on the CSI reference resource of the first CSI Reporting.

As an embodiment, the CSI reference resource of the first CSI Reporting is a subband or broadband for which the first CSI Reporting is directed in the frequency domain.

As an embodiment, the CSI reference resource of the first CSI Reporting belongs to the same Bandwidth Part (BWP) in the frequency domain as the frequency domain resource of the first CSI Reporting.

As an embodiment, the CSI reference resource of the first CSI Reporting is a first time slot over a time domain that depends on the time slot occupied by the first physical layer channel.

As an embodiment, a description of the CSI reference resource of the first CSI Reporting may refer to Section 5.2.2.5 of TS38.214.

As an embodiment, the format of the first DCI is one of the DCI formats in a second DCI format set; the first symbol is the first symbol after the second physical layer channel.

As an embodiment, the format of the first DCI is one of the DCI formats in a second DCI format set; the first symbol is the earliest symbol occupied by the second physical layer channel.

As an embodiment, the format of the first DCI is one of the DCI formats in a second DCI format set; the first symbol is an earlier value of both the earliest symbol in the first occasion set and the first symbol after the second physical layer channel.

As an embodiment, the format of the first DCI is one of the DCI formats in a second DCI format set; the first symbol is an earlier value of both the oldest symbol in the first occasion set and the oldest symbol occupied by the second physical layer channel.

As an embodiment, when the reportConfigType (reporting configuration type) domain in the first CSI-Report-Config is semiPersistentOnPUSCH (semi-continuous on PUSCH), the first physicallayer channelis PUSCH; when the reportConfigType domain in the first CSI-ReportConfig is periodic, the first physical layer channelis PUCCH.

As an embodiment, the reportConfigType domain in the first CSI-ReportConfig is periodic and the first physicallayer channelis PUCCH.

As an embodiment, the reportConfigType domain in the first CSI-ReportConfig is semiPeristentOnPUCCH (semi-continuous on PUCCH), the first physicallayer channelis PUCCH.

As an embodiment, the format of the first DCI is one of the DCI formats in a first DCI format set, the first domain in the first DCI being used to trigger at least the first CSI Reporting.

As an embodiment, the first domain is a CSI request domain.

As an embodiment, the first domain comprises no more than 6 bits.

As an embodiment, the format of the first DCI is one of a DCI format in a second DCI format set, the second domain in the first DCI being used to trigger a first operation set comprising sending at least the first CSI Reporting.

As an embodiment, the second domain comprises no more than 6 bits.

As an embodiment, the second domain comprises a number of bits of 2.

As an embodiment, the name of the second domain comprises activation.

As an embodiment, the first operation set comprises performing measurements in a first RS resource group.

As an embodiment, the first operation set comprises a hypothetical switch from a first RS resource group to a second Quasi co-location (QCL) parameter, wherein the measurement on the first RS resource set is used to generate at least the first CSI report, and the first RS resource set includes at least one of a CSI - RS resource, a CSI-IM resource, and an SSB resource.

As an embodiment, the first QCL parameter indicates at least one of the first downlink RS resource and the first *qcl-Type* (QCL type); the second QCL parameter indicates at least one of the second downlink RS resource and the second *qcl-Type*.

As an embodiment, the first and second downlink RS resources are respectively indicated by an SSB index

As an embodiment, the first and second downlinkRS resources are respectively a CSI-RS resource.

As an embodiment, before performing the behaviorto switch from the first QCL parameter to the second QCL parameter, any RS resource in the first RS resource group and the first downlink RS resource QCL; after performing the behaviorto switch from the first QCL parameter to the second QCL parameter, any RS resource in the first RS resource group and the second downlink RS resource QCL.

As an embodiment, prior to performing the behavior to switch from the first QCL parameter to the second QCL parameter, any RS port of any one of the RS resources in the first RS resource group and any of the first downlink RS resources are QCL; after performing the behavior to switch from the first QCL parameter to the second QCL parameter, any of the RS resources in the first RS resource group and the second downlink RS resource are QCL.

As an embodiment, prior to performing the behavior to switch from the first QCL parameter to the second QCL parameter, the QCL type of any one of the RS resources in the first RS resource group and the first downlink RS resource is indicated by the first *qcl-Type*; after performing the behavior to switch from the first QCL parameter to the second QCL parameter, the QCL type of any one of the first RS resource groups and the second downlinkRS resource is indicated by the second *qcl-Type*.

As an embodiment, the content included in each of at least the first CSI Reporting is indicated by the reportQuantity (Reporting quantity) in the first CSI-reportconfig.

As an embodiment, one CSI Reporting comprises at least one of CSI-RS Resource Indicator (CRI), Rank Indicator (RI), Precoding Matrix Indicator(PMI), or Channel Quality Indicator(CQI).

As an embodiment, one CSI Reporting comprises Layer Indicator (LI).

As an embodiment, a CSI reporting comprises a Reference Signal Receiving Power (RSRP).

## Embodiment 2

Embodiment 2 illustrates a schematic diagram of a network architecture according to one embodiment of the present application, as shown in FIG. 2. FIG. 2 illustrates the 5G NewRadio (NR), Long - Term Evolution (LTE) and Long-Term Evolution Advanced (LTE-A) system architecture. The 5G NR or LTE network architecture 200 may be referred to as some other suitable term of 5GSystem (5GS)/Evolved Packet System (EPS). The EPS 200 may include User Equipment (UE) 201, Next Generation Wireless Access Network (NG-RAN) 202, Evolved Packet Core (EPC)/5G-Core Network (5G-CN) 210, Home Subscriber Server (HSS) 220, and Internet service 230. The EPS may be interconnected with other access networks, but these entities/interfaces are not shown for simplicity. As shown, the EPS provides packet exchange services. However, it will be readily understood by those skilled in the art that various concepts presented throughout the present application can be extended to a network or other cellular network providing circuit switching services. NG-RAN comprises NR node B (gNB) 203 and other gNB204. The gNB 203 provides user and control plane protocol termination towards the UE 201. The gNB 203 may be connected to the other gNB 204 via an Xn interface (e.g., backhaul). The gNB203 may also be referred to as a base station, a base transceiver station, a radio base station, a radio transceiver, a transceiver function, a Base Service Set (BSS), an Extension Service Set (ESS), a TRP, or some other suitable term. gNB203 provides access points to EPC/5G-CN 210 for UE201. Examples of UE201 include cellular phone, smart phone, Session Initiation Protocol (SIP) phone, laptop computer, Personal Digital Assistant (PDA), satellite radio, non-ground base station communication, satellite mobile communication, global positioning system, multimedia device, video device, digital audio player (e.g., MP3 player), camera, game console, drone, aircraft, narrowband Internet of Things device, machine type communication device, land vehicle, automobile, wearable device, or any other similar functional apparatuses. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, a user agent, a mobile client, a client, or some other suitable term. gNB203 is connected to EPC/5G-CN 210 via the S1/NG interface. EPC/5G-CN 210 comprises Mobility Management Entity (MME)/Authentication Management Field (AMF)/User Plane Function (UPF) 211, other MME/AMF/UPF214, Service Gateway (S-GW) 212 and Packet Date Network Gateway (P-GW) 213. MME/AMF/UPF211 is a control node that processes signaling between UE201 and EPC/5G-CN 210. In general, MME/AMF/UPF211 provides carrier and connection management. All user Internet Protocol (IP) packages are transmitted via S-GW212 which is itself connected to P-GW213. The P-GW213 provides UE IP address assignment as well as other functions. The P-GW213 is connected to the Internet service 230. The Internet service 230 comprises an operator's corresponding Internet protocol service, which may include, inter alia, the Internet, an intranet, an IP Multimedia Subsystem(IMS), and a packet exchange streaming service.

As an embodiment, the UE201 corresponds to the first node in the present application and the gNB203 corresponds to the second node in the present application.

As an embodiment, the UE201 is a Massive-MIMO enabled terminal.

As an embodiment, the gNB203 supports Massive-MIMO based transmission.

As an embodiment, the gNB203 is a MarcoCellular base station.

As an embodiment, the gNB203 is a Micro Cell base station.

As an embodiment, the gNB203 is a PicoCell base station.

As an embodiment, the gNB203 is a Femtocell base station.

As an embodiment, the gNB203 is a base station device that supports large latency differences.

As an embodiment, the gNB203 is a flight platform device.

As an embodiment, the gNB203 is a satellite device.

As an embodiment, the first and second nodes in the present application are the UE201 and the gNB203 respectively.

**Embodiment 3**

Embodiment 3 illustrates a schematic diagram of an embodiment of a wireless protocol architecture for an userplane and a control plane of the present application, as shown in FIG. 3. FIG. 3 illustrates a schematic diagram of an embodiment of a radio protocol architecture for a user plane 350 and a control plane 300, FIG. 3 shows, with three layers, a radio protocol architecture for a first node device (RSU in UE or V2X, in-vehicle device or in-vehicle communication module) and a second node device (RSU in gNB, UE or V2X, in-vehicle device or in-vehicle communication module), or control plane 300 between two UEs: Layers 1, 2 and 3. The layer 1 (L1 layer) is the lowest layer and implements various Physical Layer (PHY) signal processing functions. The L1 layer will be referred to herein as PHY301. The layer 2 (L2 layer) 305 is over PHY301 and is responsible for the link between the first and second node devices and the two UEs through PHY301. The L2 layer 305 comprises a Medium Access Control(MAC) sublayer302, a Radio Link Control (RLC) sublayer303, and a Packet Data Convergence Protocol (PDCP) sublayer304 which terminate at the second communication node device. The PDCP sublayer 304 provides data encryption and integrity protection, and the PDCP sublayer304 also provides inter-cell movement support for the first node device to the second node device. The RLC sublayer 303 provides segmentation and recombination of the data packet to enable retransmission of the missing data packet through ARQ, and the RLC sublayer 303 also provides duplicate data packet detection and protocol error detection. The MAC sublayer 302 provides a mapping between the logic and the transmission channel and a reuse ofthe logic channel. The MAC sublayer 302 is also responsible for distributing various radio resources (e.g., resource blocks) in one cell between the first node devices. The MAC sublayer 302 is also responsible for HARQ operations. The Radio Resource Control (RRC) sublayer 306 in layer 3 (L3 layer) in the control plane 300 is responsible for obtaining the radio resources (i.e., radio carrier) and configuring the lower layer using RRC signaling between the second node device and the first node device. The radio protocol architecture ofthe userplane 350 comprises a layer 1 (L1 layer) and a layer 2 (L2 layer), the radio protocol architecture for the first node device and the second node device is generally the same as the corresponding layers and sublayers in the control plane 300 for the physicallayer 351, the PDCP sublayer354 in the L2 layer 355, the RLC sublayer353 in the L2 layer 355, and the MAC sublayer 352 in the L2 layer 355. However, the PDCP sublayer 354 also provides header compression for upper-layer data packets to reduce radio transmission overhead. The L2 layer 355 in the user plane 350 also comprises a sublayer 356 of Service Data Adaptation Protocol (SDAP), which is responsible for mapping between the QoS stream and Data Radio Bearer (DRB) to support the diversity of the business. Although not shown, the first node device may have several upper layers over the L2 layer 355 including a network layer (e.g., an IP layer) that terminates at the P-GW on the network side and an application layer that terminates at the other end of the connection (e.g., a far-end UE, a server, etc.).

As an embodiment, the wireless protocol architecture in FIG. 3 applies to the first node in the present application.

As an embodiment, the wireless protocol architecture in FIG. 3 applies to the second node in the present application.

As an embodiment, the first DCI in the present application is generated at the PHY301.

As an embodiment, at least the first CSI Reporting in the present application is generated at the PHY301.

As an embodiment, the first CSI-Reportconfig in the present application is generated at the RRC sublayer 306.

As an embodiment, the measurement for the first reference signal set in the present application is performed in the PHY301.

## Embodiment 4

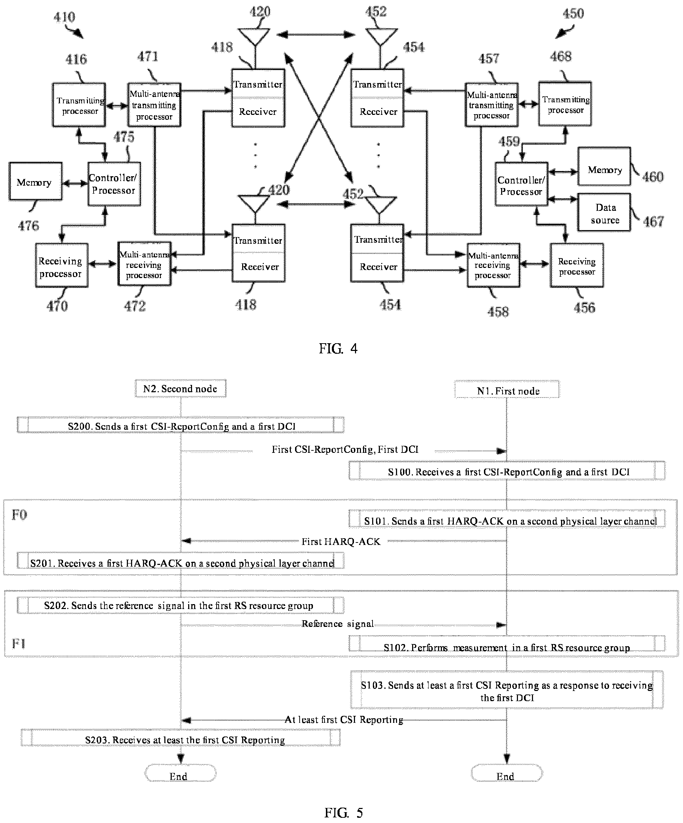

Embodiment 4 illustrates a schematic diagram of a hardware module for a communication node according to an embodiment of the present application, as shown in FIG. 4. FIG. 4 is a block diagram of a first communication device 450 and a second communication device 410 in communication with each other over an access network.

The first communication device 450 comprises a controller/processor459, a memory 460, a data source 467, a transmitting processor468, a receiving processor456, a multi-antenna transmitting processor457, a multi-antenna receiving processor458, a transmitter/receiver 454, and an antenna 452.

The second communication device 410 comprises a controller/processor 475, a memory 476, a receiving processor 470, a transmitting processor 416, a multi-antenna receiving processor 472, a multi-antenna transmitting process or 471, a transmitter/receiver 418, and an antenna 420.

In the transmission from the second communication device 410 to the first communication device 450, at the second communication device 410, the upper data packet from the core network is provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logic and the transport channel, and radio resource distribution to the first communication device 450 based on various priority measures. The controller/processor 475 is also responsible for the retransmission of the lost package and the signaling to the first communication device 450. The transmitting processor 416 and the multi-antenna transmitting processor 471 implement various signal processing functions for the L1 layer (i.e., the physical layer). The transmitting processor 416 implements coding and interleaving to facilitate Forward Error Correction (FEC) at the second communication device 410 and mapping of signal clusters based on various modulation schemes (e.g., Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor471 pre-codes encoded and modulated symbols in digital space, including codebook-based pre-coding and non-codebook-based pre-coding, and beam-based processing, generating one or more spatial streams. The transmitting processor 416 then maps each spatial stream to a sub-carrier, multiplexing with a reference signal(e.g., a frequency director) in the time and/or frequency domain, and then used an Inverse Fast Fourier Transform(IFFT) to generate a physical channel ofthe time domain multi-wave symbol streamon the carrier. The multi-antenna transmitting processor471 then sends the simulated pre-coding/beam-forming operation for the time domain multi-carrier symbol flow. Each transmitter 418 converts the baseband multi-carrier symbol flow provided by the multi-antenna transmitting processor471 into a radio frequency flow, which is then provided to a different antenna 420.

In transmission from the second communication device 410 to the first communication device 450, at the first communication device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor456 and the multi-antenna receiving processor458 implement various signal processing functions of the L1 layer. The multi-antenna receiving processor458 receives the simulated pre-coding/beam-forming operation for the baseband multi-carrier symbol flow from the receiver 454. The receiving processor 456 uses a Fast Fourier Transform (FFT) to transition the baseband multi-carrier symbol flow from the time domain to the frequency domain after receiving the simulated pre-coding/beam-forming operation. In the frequency domain, the physical layer data signal and the reference signal are demultiplexed by the receiving processor 456, where the reference signal is used for channel estimation and the data signal recovers any spatial stream to the first communication device 450 for destination after multi-antenna detection by the multi-antenna receiving processor458. The symbols on each spatial stream are demodulated and restored in the receiving processor 456 and generate a soft decision. The receiving processor 456 is then received deinterleaving and the channel decoding the soft decision to resume the upper layer data and control signal transmitted by the second communication device 410 over the physical channel. The upper layer data and control signal are then provided to the controller/processor 459. The controller/processor 459 implements the functions ofthe L2 layer. The controller/processor459 may be associated with the memory 460 storing program code and data. The memory 460 may be referred to as a computer-readable medium. In the transmission from the second communication device 410 to the second device 450, the controller/processor 459 provides multiplexing between the transport and logical channel, packet reassembly, decryption, header decompres sion, control signal processing to recover the upper data packet from the core network. The upper layer data packet is then provided to all protocol layers above the L2 layer. Various control signals may also be provided to L3 for L3 processing.

In the transmission from the first communication device 450 to the second communication device 410, at the first communication device 450, the data source 467 is used to provide the upper data packet to the controller/processor 459. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logic and transport channels basedon wireless resource allocation, implementing L2 layer functions for the user plane and control plane. The controller/processor459 is also responsible for the retransmission of the lost package and the signaling to the second communication device 410. The transmitting processor 468 executes a channel encoding, interleaving, and modulation mapping, and the multi-antenna transmitting processor 457 pre-codes the digital multi-antenna space, including codebook-based pre-coding and non-codebook-based pre-coding, and beam-bas ed proces sing, after which the transmitting proces sor468 adjusts the resulting spatial stream to a multi-wave/single-wave symbol stream, and after the multi-antenna transmitting processor 457 operates is pre-coded/beam/beamed to various antenna 452 via the transmitter 454. Each transmitter 454 first converts the baseband symbol flow provided by the multi-antenna transmitting processor457 into a radio frequency symbol flow, which is then provided to the antenna 452.

In the transmission from the first communication device 450 to the second communication device 410, the second communication device 410 performs functions similar to those of the receiving function at the first communication device 450, as described in the transmission from the second communication device 410 to the first communication device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor470 and the multi-antenna receiving processor472 collectively implement the functions of the L1 layer. The controller/processor 475 implements the function of the L2 layer. The controller/processor 475 may be associated with the memory 476 storing program code and data. The memory 476 may be referred to as a computer-readable medium. In the transmission from the first communication device 450 to the second communication device 410, the controller/proces sor475 provides multiplexing between the transport and logical channel, packet reassembly, decryption, header decompression, control signal processing to recover the upper data packet from the UE450. The upper layer data packet from the controller/process or 475 may be provided to the core network.

As an embodiment, the first communication device 450 apparatus comprises: at least one processor and at least one memory, and at least one memory comprising computer program code; at least one memory and computer program code being configured to be used together with at least one processor, the first communication device 450 apparatus at least: Receiving the first CSI-ReportConfig and the first DCI; when the format of the first DCI is one DCI format in the second DCI format set, sends the first HARQ-ACK on the second physicallayer channel, where the first HARQ-ACK is associated with the first DCI; transmit at least the first CSI Reporting as a response to receiving the first DCI; wherein the first CSI-ReportConfig is used to configure at least the first CSI Reporting; the first CSI Reporting occupies a CSI processing unit from the first symbol until the last symbol of the first physicallayer channel, and the first CSI Reporting is on the first physical layer channel; the first symbol is related to the format of the first DCI, and when the format of the first DCI is one DCI format in the first DCI format set, the first symbol is the first symbol after the PDCCH occupied by the first DCI, wherein the first DCI format set includes at least one DCI format for uplink grant; when the format of the first DCI is one DCI format in the second DCI format set, the first symbol is later than the first symbol after the PDCCH occupied by the first DCI.

As an embodiment, the first communication device 450 comprises: a memory storing a computer-readable instruction program that, when executed by at least one processor, generates an action, the action comprising: Receiving the first CSI-ReportConfig and the first DCI; when the format of the first DCI is one DCI format in the second DCI format set, sends the first HARQ-ACK on the second physical layer channel, where the first HARQ-ACK is associated with the first DCI; transmit at least the first CSI Reporting as a response to receiving the first DCI; wherein the first CSI-ReportConfig is used to configure at least the first CSI Reporting; the first CSI Reporting occupies a CSI processing unit from the first symbol until the last symbol of the first physicallayer channel, and the first CSI Reporting is on the first physicallayer channel; the first symbol is related to the format of the first DCI, and when the format of the first DCI is one DCI format in the first DCI format set, the first symbol is the first symbol after the PDCCH occupied by the first DCI, wherein the first DCI format set includes at least one DCI format for uplink grant; when the format of the first DCI is one DCI format in the second DCI format set, the first symbol is later than the first symbol after the PDCCH occupied by the first DCI.

As an embodiment, the second communication device 410 apparatus compris es: at least one processor, and at least one memory comprising computer program code; at least one memory and computer program code configured for use with at least one processor. The second communication device 410 apparatus at least: Sending the first CSI-ReportConfig and the first DCI; when the format of the first DCI is one DCI format in the second DCI format set, receiving the first HARQ-ACK on the second physical layer channel, where the first HARQ-ACK is associated with the first DCI; receiving at least the first CSI Reporting, wherein the first CSI-ReportConfig is used to trigger at least the first CSI Reporting; wherein the first CSI-ReportConfig is used to configure at least the first CSI Reporting; the first CSI Reporting occupies a CSI processing unit from the first symbol until the last symbol of the first physical layer channel, and the first CSI Reporting is on the first physical layer channel; the first symbol is related to the format of the first DCI, and when the format of the first DCI is one DCI format in the first DCI format set, the first symbol is the first symbol after the PDCCH occupied by the first DCI, wherein the first DCI format set includes at least one DCI format for uplink grant; when the format of the first DCI is one DCI format in the second DCI format set, the first symbol is later than the first symbol after the PDCCH occupied by the first DCI.

As an embodiment, the second communication device 410 apparatus comprises: a memory storing a computer-readable instruction program that, when executed by at least one processor, generates an action, the action comprising: Sending the first CSI-ReportConfig and the first DCI; when the format of the first DCI is one DCI format in the second DCI format set, receiving the first HARQ-ACK on the second physical layer channel, where the first HARQ-ACK is associated with the first DCI; receiving at least the first CSI Reporting, wherein the first CSI-ReportConfig is used to trigger at least the first CSI Reporting; wherein the first CSI-ReportConfig is used to configure at least the first CSI Reporting; the first CSI Reporting occupies a CSI processing unit from the first symbol until the last symbol of the first physical layer channel, and the first CSI Reporting is on the first physical layer channel; the first symbol is related to the format of the first DCI, and when the format of the first DCI is one DCI format in the first DCI format set, the first symbol is the first symbol after the PDCCH occupied by the first DCI, wherein the first DCI format set includes at least one DCI format for uplink grant; when the format of the first DCI is one DCI format in the second DCI format set, the first symbol is later than the first symbol after the PDCCH occupied by the first DCI.

As an embodiment, the first communication device 450 corresponds to a first node in the present application.

As an embodiment, the second communication device 410 corresponds to a second node in the present application.

As an embodiment, the first communication device 450 is a UE and the second communication device 410 is a base station.

As an embodiment, the antenna 452, the receiver 454, the multi-antenna receiving processor 458, the receiving processor 456, is used to receive the first DCI and the first CSI-ReportConfig.

As an embodiment, the controller/processor 459 is used to generate at least the first CSI Reporting.

As an embodiment, the antenna 452, the transmitter 454, the multi-antenna transmitting processor 457, the transmitting processor 468, the controller/processor 459 is used to send the first DCI and the first CSI - ReportConfig.

As an embodiment, the antenna 420, the transmitter 418, the multi-antenna transmitting processor 471, the transmitting processor 416 being used to send a reference signal.

As an embodiment, the controller/processor 475 is used to send the first DCI and the first CSI-ReportConfig.

As an embodiment, the antenna 420, the receiver 418, the multi-antenna receiving processor 472, the receiving processor 470, the controller/processor 475 is used to receive at least the first CSI Reporting.

## Embodiment 5

Embodiment 5 exemplifies a transmission flow diagram between a first node and a second node according to an embodiment of the present application, as shown in FIG. 5. The steps in block F0 and in block F1 are respectively optional in FIG. 5.

For the first node N1, receiving a first CSI-ReportConfig and a first DCI in step S100; sending at least a first CSI Reporting as a response to receiving the first DCI in step S103;

for the second node N2, sending a first CSI-ReportConfig and a first DCI in step S200; receiving at least a first CSI Reporting in step S203, wherein the first DCI is used to trigger the first CSI Reporting;

In Embodiment 5, the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol of PDCCH occupied by the first DCI, wherein the first DCI format set includes at least one DCI format for uplink grant.

As an embodiment, the format of the first DCI is a DCI format in a second DCI format set, the first node N1 sending a first HARQ-ACK on a second physical layer channel in step S101, the second node N2 receiving a first HARQ-ACK on a second physical layer channel in step S201; wherein the first HARQ-ACK is associated with the first DCI, the first symbol being later than the first symbol after the PDCCH occupied by the first DCI.

As an embodiment, the second node sends a reference signal in the first RS resource group in step S202, wherein the reference signal in the first RS resource group is used to generate at least the first CSI Reporting; the first node N1, in step S102, performs a measurement in a first RS resource group, and the measurement in the first RS resource group is used to generate the first CSI Reporting; wherein the first DCI is used to trigger the measurement in the first RS resource group comprising at least one of a CSI-RS resource, a CSI-IM resource and an SSB resource.

As an embodiment, the first CSI-ReportConfig is used to configure the first RS resource group.

As an embodiment, the first DCI is used to indicate the Transmission Configuration Indicator state (tcistate) of each CSI-RS resource in the first RS resource group.

As an embodiment, the first DCI is used to indicate activation or trigger of the first RS resource group.

As an embodiment, the first DCI is used to trigger a rate match for PDSCH execution on Resource Element (RE) of the first RS resource group.

As an embodiment, the first DCI is used to indicate a time domain resource of the first RS resource group.

As an embodiment, the second node sends a reference signal in the step S202 on an RS resource other than CSI-IM in the first RS resource set.

As an embodiment, the first DCI is used to determine the first CSI-ReportConfig.

As an embodiment, the first DCI is used to indicate from a plurality of CSI-ReportConfig groups that the first CSI-ReportConfig belongs to a CSI-ReportConfig group, a CSI-ReportConfig group comprises at least one CSI-ReportConfig.

As an embodiment, the plurality of CSI-ReportConfig groups are configured by the same RRC Information Element (IE).

As an embodiment, the plurality of CSI-ReportConfig groups correspond to a plurality of trigger states respectively, the first DCI indicating from the plurality of trigger states a corresponding trigger state of the CSI-ReportConfig group to which the first CSI-ReportConfig belongs.

As an embodiment, the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

As an embodiment, the first occasion set belongs to the first RS resource group.

As an embodiment, the nearest CSI-RS occasion, the nearest CSI-IM occasion, and the nearest SSB occasion belong to the CSI-RS resource, the CSI-IM resource, and the SSB resource of the first RS resource group, respectively.

As an embodiment, the format of the first DCI is one of the DCI formats in a second DCI format set; the first symbol is the first symbol after the second physical layer channel.

As an embodiment, at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

As a sub-implementation of the above embodiment, the reportConfigType domain in the first CSI-ReportConfig is not aperiodic.

As a sub-embodiment of the above embodiment, the reportConfigType domain in the first CSI-ReportConfig is periodic, semiPeristentOnPUSCH, or semiPeristentOnPUCCH.

As an embodiment, the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

As a sub-embodiment of the above embodiment, when the format of the first DCI is one of the DCI formats in the first DCI format set, the Time Domain Resource Assignment (TDRA) domain in the first DCI is used to indicate the time domain resource occupied by the first physical layer channel; when the format of the first DCI is one of the DCI formats in the second DCI format set, the first DCI indicates the domain resource RACK occupied by the first HA of the first HA resource, and the time domain resource occupied by the first HARQ-ACK is used to determine a time domain resource occupied by the first physical layer channel.

As an embodiment, the PDSCH-to-HARQ_feedback timing indicator domain in the first DCI indicates the time domain resource occupied by the first HARQ-ACK.

As an embodiment, the time domain resources occupied by the first HARQ-ACK implicitly indicate time domain resources occupied by the first physical layer channel.

As an embodiment, the first CSI-ReportConfig indicates a time slot used for CSI Reporting; the time slot occupied by the first physical layer channel is the first time slot of the time slot used for CSI Reporting after the time slot occupied by the first HARQ-ACK.

As an embodiment, the time slot used for CSI Reporting is indicated by the reportSlotConfig domain in the first CSI-ReportConfig.

### Embodiment 6

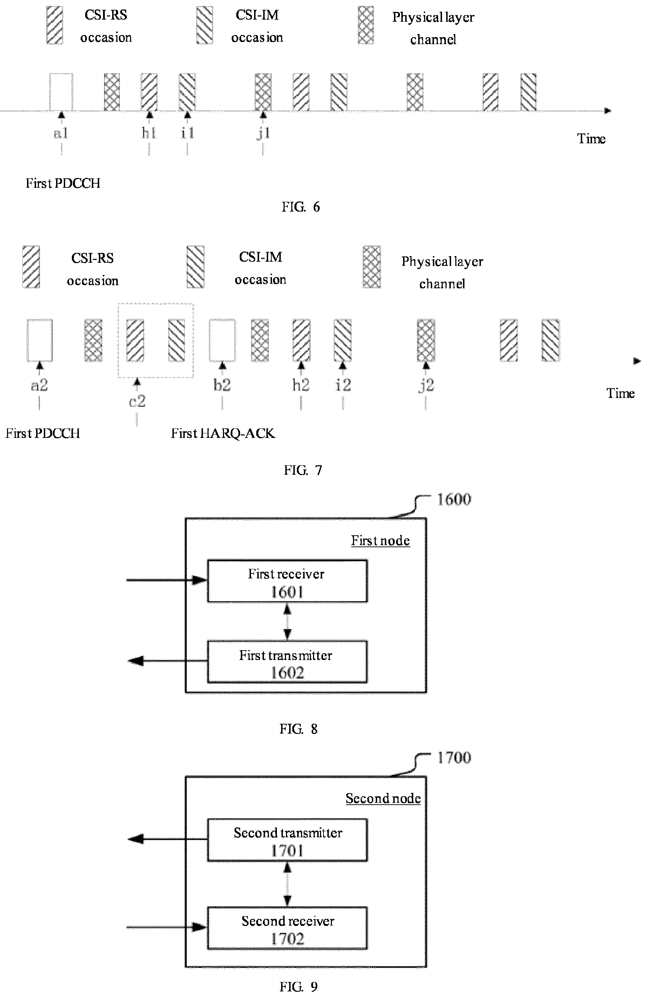

Embodiment 6 illustrates a schematic diagram of a first PDCCH, a first occasion set, and a first physical layer channel, according to an embodiment of the present disclosure, as shown in FIG. 6. In FIG. 6, the small box filled by slashes represents a CSI-RS occasion, the small box filled by deskslashes represents a CSI-IM occasion, and the small box filled by crosslines represents a physical layer channel.

In Embodiment 6, the first DCI in the first PDCCH, the time domain resources occupied by the first PDCCH are shown as arrow al; signaling for configuring the time domain resources occupied by the physicallayer channel in the FIG. 6 is included as a first CSI-ReportConfig; the first CSI Reporting is in the first physicallayer channel, and the time domain resources occupied by the first physicallayer channel are indicated by arrow j1; the time slot to which the time domain resources occupied by the first physicallayer channel belong is used to determine the CSI reference resource for the first CSI Reporting; arrow h1 and arrow i1 indicate the latest CSI-RS occasion and the latest CSI-IM occasion, respectively, before the first CSI Reporting; the first occasion set includes the latest CSI-RS occasion and the latest CSI-IM occasion; if the format of the first DCI is one DCI format in the first DCI format set; the first symbol is the first symbol after the first PDCCH; if the format of the first DCI is one DCI format in the second DCI format set; the first symbol is the earliest symbol in the first occasion set.

As an embodiment, the CSI reference resource of the first CSI Reporting is a time slot to which the first physical layer channel belongs.

As an embodiment, the time slot to which the first physical layer channel belongs is n', the CSI reference resource of the first CSI Reporting is a time slot f($n'$) on the time domain, and the $f(n')$ is a function.

As an embodiment, the first DCI is used to indicate a time slot $n'$.

As an embodiment, the first DCI is used to indicate a symbol occupied by the first physical layer channel in a time slot $n'$.

As an embodiment, the f($n'$) is $\left\lfloor n' \cdot \dfrac{2^{\mu_{DL}}}{2^{\mu_{UL}}} \right\rfloor + o$ wherein $\mu_{DL}$ and $\mu_{UL}$ are down- and uplink sub-carrier spacing, respectively, o is configurable, $\lfloor\ \rfloor$ representing a round down operation.

As an embodiment, the o is an integer.

As an embodiment, the o refers to the description in Embodiment 7.

### Embodiment 7

Embodiment 7 exemplifies a schematic diagram of a first PDCCH, a first occasion set, and a first physicallayer channel of yet another embodiment of the present disclosure, as shown in FIG. 7. In FIG. 7, the small box filled with slashes represents a CSI-RS occasion, the small box filled with reverse slashes represents one CSI-IM occasion, and the small box filled with cross -line represents a physical layer channel; the CSI-RS occasion and CSI-IM occasion within the dashed boxindicated by arrow c2 in FIG. 7 are optional.

In Embodiment 7, the first DCI is in the first PDCCH, and the time domain resources occupied by the first PDCCH are indicated by arrow a2; the signaling used to configure the time domain resources occupied by the physical layer channel in FIG. 7 includes the first CSI-ReportConfig; the format of the first DCI is one of the DCI formats in a second DCI format set, and the first DCI is used to trigger the first HARQ-ACK, which occupies the time domain resources indicated by arrow b2; the first symbol is the earliest symbol in the first occasion set, and the first CSI Reporting is on the first physical layer channel, which occupies the time domain resources indicated by arrow j2; the time slot to which the time domain resources belong is used to determine the CSI reference resource of the first CSI Reporting; arrows h2 and i2 respectively indicate the latest CSI-RS occasion and the latest CSI-IM occasion before the CSI reference resource of the first CSI Reporting; the first occasion set includes the latest CSI-RS occasion and the most recent CSI-IM occasion.

As an embodiment, the time slot occupied by the first HARQ-ACK is used to determine the time slot occupied by the first physical layer channel.

As an embodiment, the first CSI-ReportConfig configuration is for the time slot of CSI Reporting, and the time slot occupied by the first physicallayer channel is for one of the time slots of CSI Reporting, and the time slot occupied by the first HARQ-ACK is used to determine the time slot occupied by the first physicallayer channel.

As an embodiment, the time slot occupied by the first physical layer channel is the first time slot for CSI Reporting that comes after the time slot occupied by the first HARQ-ACK.

As an embodiment, the time slot occupied by the first physical layer channel is the earliest time slot that satisfies all of the conditions in the set of target conditions, the set of target conditions comprising: The time slot of one of the time slots for CSI Reporting is located after the time slot occupied by the first HARQ-ACK and there is at least one CSI-RS occasion configured by the first CSI-ReportConfig exists between the first PDCCHs.

As an embodiment, the resource for measurement configured by the first CSI-ReportConfig is activated after the first HARQ-ACK.

As a sub-embodiment of the above embodiments, the resource for measurement is used to transmit PDSCH before being activated.

As a sub-embodiment of the above embodiments, UE performs a rate match for the resource for measurement after the resource for measurement is activated.

As a sub-embodiment of the above embodiments, for example, the CSI-RS occasion and CSI-IM occasion in the dashed line box c2 in FIG. 7 do not appear.

As an embodiment, the resource for measurement includes at least one of a CSI-RS resource and an SSB.

As an embodiment, the resource for measurement includes a CSI-IM resource.

As an embodiment, the CSI reference resource of the first CSI Reporting is a time slot to which the first physical layer channel belongs.

As an embodiment, the time slot to which the first physical layer channel belongs is $n'$, the CSI reference resource of the first CSI Reporting is a time slot $f(n')$ on the time domain, and the $f(n')$ is a function.

As an embodiment, the first DCI is used to indicate a time slot $n'$.

As an embodiment, the first DCI is used to indicate a symbol occupied by the first physical layer channel in a time slot $n'$.

As an embodiment, the $f(n')$ is $\left\lfloor n' \cdot \dfrac{2^{\mu_{DL}}}{2^{\mu_{UL}}} \right\rfloor + o$ wherein $\mu_{DL}$ and $\mu_{UL}$ are down- and uplink sub-carrier spacing, respectively, o is configurable, $\lfloor \ \rfloor$ representing a round down operation.

As an embodiment, the o is an integer.

As an embodiment, the o is $\left\lfloor \left( \dfrac{N_{slot,offset,UL}^{CA}}{2^{\mu_{offset,UL}}} - \dfrac{N_{slot,offset,DL}^{CA}}{2^{\mu_{offset,DL}}} \right) \cdot 2^{\mu_{DL}} \right\rfloor - n_{CSI\_ref} - K_{offset} \cdot \dfrac{2^{\mu_{DL}}}{2^{\mu_{K_{offset}}}}$; wherein

$K_{offset}$ is configured by higher layer signaling, $n_{CSI\_ref}$ is no less than the minimum value of $4 \cdot 2^{\mu_{DL}}$, $\mu_{K_{offset}}$, $N_{slot,offset}^{CA}$ and $\mu_{offset}$, also configured by higher layer signaling, refer to Section 5.2.2.5 of TS38.214 for detailed introduction.

As an embodiment, the physicallayer channel in FIG. 6 is PUSCH, and the reportConfigType domain in the first CSI-ReportConfig is semiPersistentOnPUSCH.

As an embodiment, the physicallayer channel in FIG. 6 is PUCCH, and the reportConfigType domain in the first CSI-ReportConfig is semiPersistentOnPUCCH.

As an embodiment, the first physical layer channel in FIG. 6 is PUCCH, and the reportConfigType domain in the first CSI-ReportConfig is periodic.

## Embodiment 8

Embodiment 8 illustrates a structural block diagram of a processing apparatus for use in a first node according to an embodiment of the present application, as shown in FIG. 8. In FIG. 8, the processing apparatus 1600 in the first node includes a first receiver 1601 and a first transmitter 1602.

The first receiver 1601 receiving a first CSI-ReportConfig, and receiving a first DCI; the first transmitter 1602, sending at least a first CSI Reporting as a response to receiving the first DCI;

In Embodiment 8, the first CSI-ReportConfig is used to configure at least the first CSI Reporting; the first CSI Reporting occupies a CSI processing unit from the first symbol until the last symbol of the first physicallayer channel, and the first CSI Reporting is on the first physical layer channel; the first symbol is related to the format of the first DCI; when the format of the first DCI is a DCI format in one ofthe first DCI format, the first symbol is the first set of PDCCH occupied by the first DCI, wherein the first DCI format set includes at least one DCI format for uplink grant;

Also, when the format of the first DCI is one of the DCI formats in a second DCI format set:

the first transmitter 1602, sending a first HARQ-ACK on a second physical layer channel; wherein the first HARQ-ACK is associated with the first DCI, the first symbol being later than the first symbol after the PDCCH occupied by the first DCI.

As an embodiment, the first receiver 1601 performs a measurement in a first RS resource group, the measurement in the first RS resource group being used to generate at least the first CSI Reporting;

wherein the first DCI is used to trigger the measurement in the first RS resource group comprising at least one of a CSI-RS resource, a CSI-IM resource, and an SSB resource.

As an embodiment, the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

As an embodiment, the format of the first DCI is one of the DCI formats in a second DCI format set; the first symbol is the first symbol after the second physical layer channel.

As an embodiment, at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

As an embodiment, the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

As an embodiment, the first node 1600 is a user device.

As an embodiment, the first transmitter 1602 comprises at least one of an antenna 452, a transmitter/receiver 454, a multi-antenna transmitting processor 457, a transmitting processor 468, a controller/processor 459, memory 460, and a data source 467 in FIG. 4 of the present application.

As an embodiment, the first transmitter 1602 comprises an antenna 452, a transmitter/receiver 454, a multi-antenna transmitting processor 457, a transmitting processor 468, a controller/processor 459, memory 460, and a data source 467 in FIG. 4 of the present application.

As an embodiment, the first receiver 1601 includes at least first five of an antenna 452, receiver 454, a multi-antenna receiving process sor 458, a receiving processor 456, a controller/processor 459, a memory 460, and a data source 467 in FIG. 4 of the present application.

As an embodiment, the first receiver 1601 includes at least first four of an antenna 452, receiver 454, a multi-antenna receiving processor 458, a receiving processor 456, a controller/processor 459, a memory 460, and a data source 467 in FIG. 4 of the present application.

As an embodiment, the first receiver 1601 includes at least first three of an antenna 452, receiver 454, a multi-antenna receiving processor 458, a receiving processor 456, a controller/processor 459, a memory 460, and a data source 467 in FIG. 4 of the present application.

## Embodiment 9

Embodiment 9 exemplifies a structural block diagram of a processing apparatus for use in a second node according to an embodiment of the present application, as shown in FIG. 9. In FIG. 9, the processing apparatus 1700 in the second node includes a second transmitter 1701 and a second receiver 1702.

the second transmitter 1701 sends a first CSI-ReportConfig, sends a first DCI and a second receiver 1702 receives at least a first CSI Reporting, wherein the first DCI is used to trigger the first CSI Reporting;

In Embodiment 9, the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first set of PDCCH occupied by the first DCI, wherein the first DCI format set includes at least one DCI format for uplink grant;

Also, when the format of the first DCI is one of the DCI formats in a second DCI format set:

the second receiver 1702, receiving a first HARQ-ACK on a second physical layer channel;

wherein the first HARQ-ACK is associated with the first DCI, the first symbol being later than the first symbol after the PDCCH occupied by the first DCI.

As an embodiment, the second transmitter 1701 sends a reference signal in a first RS resource group, wherein the reference signal in the first RS resource group is used to generate at least the first CSI Reporting;

wherein the first DCI is used to trigger the measurement in the first RS resource group comprising at least one of a CSI-

RS resource, a CSI-IM resource, and an SSB resource.

As an embodiment, the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

As an embodiment, the format of the first DCI is one of the DCI formats in a second DCI format set; the first symbol is the first symbol after the second physical layer channel.

As an embodiment, at least the first CSI Reporting comprises a plurality of CSI Reporting, with the first CSI Reporting being the earliest among them; for any CSI Reporting otherthan the first CSI Reporting, the CSI processing unit is occupied from the target symbol until the last symbol of the target physicallayer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

As an embodiment, the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

As an embodiment, the second node 1700 is a base station device.

As an embodiment, the second transmitter 1701 comprises the antenna 420, the transmitter 418, the transmitting processor416, the controller/processor475.

As an embodiment, the second transmitter 1701 comprises the antenna 420, the transmitter 418, the multi-antenna transmitting processor471, the transmitting processor 416, the controller/processor475.

As an embodiment, the second transmitter 1701 comprises the antenna 420, the transmitter 418, the transmitting processor416, the controller/processor475.

As an embodiment, the second transmitter 1701 comprises the antenna 420, the transmitter 418, the multi-antenna transmitting processor471, the transmitting processor 416, the controller/processor475.

As an embodiment, the second receiver 1702 comprises the antenna 420, the receiver 418, the multi-antenna receiving processor 472, the receiving processor 470, the controller/processor475.

As an embodiment, the second receiver 1702 comprises the controller/processor475.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The user devices, terminals, and UEs in the present application include but are not limited to drones, communication modules on drones, remotely controlled aircraft, aircraft, small aircraft, cell phones, tablets, notebooks, in-vehicle communication devices, wireless sensors, network cards, IoT terminals, RFID terminals, NB-IOT terminals, MTC (Machine Type Communication) terminals, eMTC (enhanced MTC) terminals, data cards, Internet cards, in-vehicle communication devices, low-cost mobile phones, low-cost tablet computers, and other wireless communication devices. The base stations orsystemdevices in the present application include, but are not limited to, macrocellular base stations, microcellular base stations, home base stations, relay base stations, gNB NR node B, TRP (Transmitter Receiver Point), and other wireless communication devices.

Those skilled in the art will understand that the presentdisclosure canbe implemented in other specific forms without departing from its core or essential characteristics. Thus, the presently disclosed embodiments should in any event be considered descriptive rather than restrictive. The scope of the disclosure is determined by the appended claims, not by the preceding description, and all variations within their equivalent meaning and area are considered to be included therein.

### Claims

1. A first node for wireless communication, wherein it comprises:

> a first receiver, receiving a first CSI-ReportConfig, receiving a first DCI;
> a first transmitter, sending at least a first CSI Reporting as a response to receiving the first DCI;

wherein the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol after the PDCCH occupied by the first DCI, wherein the first DCI format set includes at least one DCI format for uplink grant; Also, when the format of the first DCI is one of the DCI formats in a second DCI format set:

the first transmitter, sending a first HARQ-ACK on a second physical layer channel;

wherein the first HARQ-ACK is associated with the first DCI, the first symbol being later than the first symbol after the PDCCH occupied by the first DCI.

2. The first node according to Claim 1, wherein it comprises:

the first receiver performing a measurement in a first RS resource group, the measurement in the first RS resource group being used to generate the first CSI Reporting;

wherein the first DCI is used to trigger the measurement in the first RS resource group comprising at least one of a CSI-RS resource, a CSI-IM resource, and an SSB resource.

3. The first node according to Claim 1 or 2, wherein the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

4. The first node according to Claim 1 or 2, wherein the format of the first DCI is one of the DCI formats in a second set of DCI formats; the first symbol is the first symbol after the second physical layer channel.

5. The first node according to any one of Claims 1-4, wherein at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

6. The first node according to any one of Claims 1-5, wherein the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

7. A second node for wireless communication, wherein it comprises:

a second transmitter, sending a first CSI-ReportConfig, sending a first DCI;

a second receiver, receiving at least a first CSI Reporting, wherein the first DCI is used to trigger the first CSI Reporting;

wherein the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol after the PDCCH occupied by the first DCI, wherein the first DCI format set includes at least one DCI format for uplink grant; Also, when the format of the first DCI is one of the DCI formats in a second DCI format set:

the second receiver, receiving a first HARQ-ACK on a second physical layer channel;

wherein the first HARQ-ACK is associated with the first DCI, the first symbol being later than the first symbol after the PDCCH occupied by the first DCI.

8. The second node according to Claim 7, wherein it comprises:

the second transmitter transmitting a reference signal in a first RS resource group, wherein the reference signal in the first RS resource group is used to generate the first CSI Reporting;

wherein the first DCI is used to trigger the measurement in the first RS resource group comprising at least one of a CSI-RS resource, a CSI-IM resource, and an SSB resource.

9. The second node according to Claim 7 or 8, wherein the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

10. The second node according to Claim 7 or 8, wherein the format of the first DCI is one of the DCI formats in a second set of DCI formats; the first symbol is the first symbol after the second physical layer channel.

11. The second node according to any one of Claims 7-10, wherein at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

12. The second node according to any one of Claims 7-11, wherein the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

13. A method in a first node for wireless communication, wherein it comprises:

receiving a first CSI-ReportConfig and a first DCI;
sending at least a first CSI Reporting as a response to receiving the first DCI;
wherein the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol after the PDCCH occupied by the first DCI, wherein the first DCI format set includes at least one DCI format for uplink grant;
Also, when the format of the first DCI is one of the DCI formats in a second DCI format set:

sending a first HARQ-ACK on a second physical layer channel;
wherein the first HARQ-ACK is associated with the first DCI, the first symbol being later than the first symbol after the PDCCH occupied by the first DCI.

14. The method in the first node according to Claim 13, wherein it comprises:

performing a measurement in a first RS resource group, and the measurement in the first RS resource group being used to generate at least the first CSI Reporting;
wherein the first DCI is used to trigger the measurement in the first RS resource group comprising at least one of a CSI-RS resource, a CSI-IM resource, and an SSB resource.

15. The method in a first node according to Claim 13 or 14, wherein the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

16. The method in the first node according to Claim 13 or 14, wherein the format of the first DCI is one of the DCI formats in a second DCI format set; the first symbol is the first symbol after the second physical layer channel.

17. The method in first node according to any one of Claims 13-16, wherein at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, orthe most recent SSB occasion before the CSI reference resource of the CSI Reporting.

18. The method in a first node according to any one of Claims 13-17, wherein the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

19. A method in a second node for wireless communication, wherein it comprises:

> sending a first CSI-ReportConfig and a first DCI;
> receiving at least a first CSI Reporting, wherein the first DCI is used to trigger the first CSI Reporting;
> wherein the first CSI-ReportConfig is used to configure at least the first CSI Reporting; the first CSI Reporting occupies a CSI processing unit from the first symbol until the last symbol of the first physical layer channel, the first CSI Reporting is on the first physical layer channel; the first symbol is related to the format of the first DCI; when the format of the first DCI is a DCI format in one of the first DCI format, the first symbol is the first symbol after the PDCCH occupied by the first DCI, wherein the first DCI format set includes at least one DCI format for uplink grant;
> Also, when the format of the first DCI is one of the DCI formats in a second DCI format set:
>
>> the second receiver, receiving a first HARQ-ACK on a second physical layer channel;
>> wherein the first HARQ-ACK is associated with the first DCI, the first symbol being later than the first symbol after the PDCCH occupied by the first DCI.

20. The method in the second node according to Claim 19, wherein it comprises:

> sending a reference signal in a first RS resource group, wherein the reference signal in the first RS resource group is used to generate the first CSI Reporting;
> wherein the first DCI is used to triggerthe measurement in the first RS resource group comprising at least one of a CSI-RS resource, a CSI-IM resource, and an SSB resource.

21. The method in a second node according to Claim 19 or 20, wherein the format of the first DCI is one of a second DCI format set; the first symbol is the earliest symbol in the first occasion set, and the first occasion set includes at least one of the most recent CSI-RS occasion, the most recent CSI-IM occasion, or the most recent SSB occasion before the CSI reference resource of the first CSI Reporting.

22. The method in the second node according to Claim 19 or 20, wherein the format of the first DCI is one of the DCI formats in a second DCI format set; the first symbol is the first symbol after the second physical layer channel.

23. The method in second node according to any one of Claims 19-22, wherein at least the first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, orthe most recent SSB occasion before the CSI reference resource of the CSI Reporting.

24. The method in a second node according to any one of Claims 19-23, wherein the first physical layer channel is related to a format of the first DCI; when the format of the first DCI is a DCI format in a first DCI format set, the first DCI is used to indicate the time domain resources occupied by the first physical layer channel, and when the format of the first DCI is a DCI format in a second DCI format set, the time domain resources occupied by the first HARQ-ACK are used to determine the time domain resources occupied by the first physical layer channel.

100

First node

►101

receiving a first CSI-ReportConfig set and receiving a first DCI;

►102

when the format of the first DCI is one of the DCI formats in the second DCI format set, the first HARQ-ACK is sent on the second physical channel; sending at least a first CSI Reporting as a response to receiving the first DCI;

FIG. 1

EPS 200

220

HSS

NR-RAN 202

211

MME/AMF/ UPF

214

Other MME/AMF/UPF

201

UE

203

NR node B

204

Other NR node B

212

S-GW

213

P-GW

230

Internet services

5G-CN/EPC 210

FIG. 2

Control plane 300

L3

RRC

306

305

PDCP

304

L2

RLC

303

MAC

302

L1

PHY

301

User plane 350

SDAP

356

355

L2

PDCP

354

RLC

353

MAC

352

L1

PHY

351

FIG. 3

FIG. 4

FIG. 5

CSI-RS occasion    CSI-IM occasion    Physical layer channel

a1    h1    i1    j1

Time

First PDCCH

FIG. 6

CSI-RS occasion    CSI-IM occasion    Physical layer channel

a2    c2    b2    h2    i2    j2

Time

First PDCCH    First HARQ-ACK

FIG. 7

1600

First node

First receiver
1601

First transmitter
1602

FIG. 8

1700

Second node

Second transmitter
1701

Second receiver
1702

FIG. 9

## INTERNATIONAL SEARCH REPORT

| International application No. |
|---|
| **PCT/CN2023/110082** |

| A. | CLASSIFICATION OF SUBJECT MATTER |
|---|---|
| | H04L 5/00(2006.01)i |

According to International Patent Classification (IPC) or to both national classification and IPC

| B. | FIELDS SEARCHED |
|---|---|

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

3GPP, CNTXT, ENTXTC, DWPI, CNKI: CSI处理单元, 配置, 上报, 报告, 符号, 第一, 最后一个, 下行链路控制信息, 格式, 集合, CPU, config+, HARQ, ACK, CSI, PDCCH, first, last, format, report, symbol, set

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 3GPP. "3rd Generation Partnership Project;Technical Specification Group Radio Access Network; NR; Physical layer procedures for data (Release 15)" *3GPP TS 38.214 V15.10.0*, 30 June 2020 (2020-06-30), sections 5.1.6.1.1, 5.2 and 6.1 | 1-24 |
| A | CN 113507343 A (QUECTEL WIRELESS SOLUTIONS CO., LTD.) 15 October 2021 (2021-10-15) entire document | 1-24 |
| A | WO 2021163717 A1 (QUALCOMM INC.) 19 August 2021 (2021-08-19) entire document | 1-24 |
| A | WO 2021162522 A1 (LG ELECTRONICS INC.) 19 August 2021 (2021-08-19) entire document | 1-24 |
| A | WO 2022111491 A1 (SHANGHAI LANGBO COMMUNICATION TECHNOLOGY COMPANY LIMITED) 02 June 2022 (2022-06-02) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2023** | **28 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/110082** |

| Patent document cited in search report | | | Publication date (day/month/year) | Patent family member(s) | | | Publication date (day/month/year) |
| --- | --- | --- | --- | --- | --- | --- | --- |
| CN | 113507343 | A | 15 October 2021 | WO | 2022193643 | A1 | 22 September 2022 |
| WO | 2021163717 | A1 | 19 August 2021 | KR | 20220140505 | A | 18 October 2022 |
| | | | | TW | 202135493 | A | 16 September 2021 |
| | | | | BR | 112022015280 | A2 | 20 September 2022 |
| | | | | EP | 4104500 | A1 | 21 December 2022 |
| | | | | US | 2021250074 | A1 | 12 August 2021 |
| | | | | CN | 115136643 | A | 30 September 2022 |
| WO | 2021162522 | A1 | 19 August 2021 | EP | 4106217 | A1 | 21 December 2022 |
| | | | | US | 2023056263 | A1 | 23 February 2023 |
| | | | | KR | 20220124737 | A | 14 September 2022 |
| | | | | US | 2023198594 | A1 | 22 June 2023 |
| WO | 2022111491 | A1 | 02 June 2022 | CN | 114553377 | A | 27 May 2022 |

Form PCT/ISA/210 (patent family annex) (July 2022)